# EUROPEAN PATENT APPLICATION

(11) **EP 4 550 916 A1**
(43) Date of publication of application: **07.05.2025**
(21) Application number: 23845459.9
(22) Date of filing: 21.07.2023
(51) Int. Cl.: H04W 72/12

(54) **CONFIGURED GRANT (CG) DETERMINATION METHOD AND APPARATUS, AND UE, NETWORK-SIDE DEVICE AND MEDIUM**

(30) Priority: 28.07.2022 CN 202210901745
(71) Applicant: Vivo Mobile Communication Co., Ltd., Dongguan, Guangdong 523863 (CN)
(72) Inventor: LIU, Jinhua, Dongguan, Guangdong 523863 (CN); BAO, Wei, Dongguan, Guangdong 523863 (CN)
(74) Representative: Murgitroyd & Company
(86) International application number: PCT/CN2023/108631
(87) International publication number: WO 2024/022249

(57) **Abstract**

This application discloses a configured grant CG determining method and apparatus, a UE, a network side device, and a medium, and pertains to the field of communications technologies. The CG determining method in embodiments of this application includes: obtaining, by a user equipment UE, an amount of to-be-transmitted data of a CG cluster; and determining, by the UE based on the amount of the to-be-transmitted data and an uplink transmission capacity provided by each CG in the CG cluster, at least one of a CG that needs to be used and a CG not to be used.

## Description

### CROSS-REFERENCE TO RELATED APPLICATION

This application claims priority to Chinese Patent Application No. 202210901745.X, filed on July 28, 2022 in China, which is incorporated herein by reference in its entirety.

### TECHNICAL FIELD

This application pertains to the field of communications technologies, and specifically relates to a configured grant (Configured Grant, CG) determining method and apparatus, a UE, a network side device, and a medium.

### BACKGROUND

During uplink transmission of extended reality (eXtended Reality, XR) service data, an XR service compresses image data by using an H.264 coding technology to obtain a corresponding image frame, so as to save traffic and ensure image quality.

In a related technology, an amount of data transmitted by the XR service changes. To meet a transmission requirement, a base station needs to allocate a plurality of CGs to a terminal, and provide a specific redundant uplink capacity. In this way, when the terminal performs data transmission by using some of the CGs, radio resources may be wasted.

### SUMMARY

Embodiments of this application provide a CG determining method and apparatus, a UE, a network side device, and a medium, to resolve a problem of waste of radio resources in a data transmission process.

According to a first aspect, a CG determining method is provided. The method includes: obtaining, by a UE, an amount of to-be-transmitted data of a CG cluster; and determining, by the UE based on the amount of the to-be-transmitted data and an uplink transmission capacity provided by each CG in the CG cluster, at least one of a CG that needs to be used and a CG not to be used.

According to a second aspect, a CG determining apparatus is provided. The apparatus includes an obtaining module and a determining module, where the obtaining module is configured to obtain an amount of to-be-transmitted data of a CG cluster; and the determining module is configured to determine, based on the amount of the to-be-transmitted data obtained by the obtaining module and an uplink transmission capacity provided by each CG in the CG cluster, at least one of a CG that needs to be used and a CG not to be used.

According to a third aspect, a CG determining method is provided, where the method includes: receiving, by a network side device, first auxiliary information sent by a UE, where the first auxiliary information is used to determine, in a CG cluster, at least one of a CG that needs to be used and a CG not to be used; and determining, by the network side device in the CG cluster based on the first auxiliary information, at least one of the CG that needs to be used and the CG not to be used.

According to a fourth aspect, a CG determining apparatus is provided, where the apparatus includes a receiving module and a determining module. The receiving module is configured to receive first auxiliary information sent by a UE, where the first auxiliary information is used to determine, in a CG cluster, at least one of a CG that needs to be used and a CG not to be used; and the determining module is configured to determine, in the CG cluster based on the first auxiliary information received by the receiving module, at least one of the CG that needs to be used and the CG not to be used.

According to a fifth aspect, a UE is provided, where the UE includes a processor and a memory, the memory stores a program or instructions executable on the processor, and when the program or the instructions are executed by the processor, the steps of the method according to the first aspect are implemented.

According to a sixth aspect, a UE is provided, including a processor and a communications interface, where the processor is configured to: obtain an amount of to-be-transmitted data of a CG cluster; and determine, based on the amount of the to-be-transmitted data and an uplink transmission capacity provided by each CG in the CG cluster, at least one of a CG that needs to be used and a CG not to be used.

According to a seventh aspect, a network side device is provided, where the network side device includes a processor and a memory, the memory stores a program or instructions executable on the processor, and when the program or the instructions are executed by the processor, the steps of the method according to the third aspect are implemented.

According to an eighth aspect, a network side device is provided, including a processor and a communications interface, where the communications interface is configured to receive first auxiliary information sent by a UE, where the first auxiliary information is used to determine, in a CG cluster, at least one of a CG that needs to be used and a CG not to be used; and the processor is configured to determine, in the CG cluster based on the first auxiliary information, at least one of the CG that needs to be used and the CG not to be used.

According to a ninth aspect, a communications system is provided, including a UE and a network side device, where the UE may be configured to perform the steps of the method according to the first aspect, and the network side device may be configured to perform the steps of the method according to the third aspect.

According to a tenth aspect, a readable storage medium is provided, where a program or instructions are stored in the readable storage medium, and when the program or the instructions are executed by a processor, the steps of the method according to the first aspect or the steps of the method according to the third aspect are implemented.

According to an eleventh aspect, a chip is provided, where the chip includes a processor and a communications interface, the communications interface is coupled to the processor, and the processor is configured to run a program or instructions to implement the method according to the first aspect or the steps of the method according to the third aspect.

According to a twelfth aspect, a computer program/program product is provided, where the computer program/program product is stored in a storage medium, and the computer program/program product is executed by at least one processor to implement the method according to the first aspect or the steps of the method according to the third aspect.

In the embodiments of this application, the UE may obtain the amount of the to-be-transmitted data of the CG cluster, and then determine, based on the amount of the to-be-transmitted data and the uplink transmission capacity provided by each CG in the CG cluster, at least one of the CG that needs to be used and the CG not to be used. In this way, because the UE can obtain a total amount of data that needs to be transmitted in the CG cluster, the UE can accurately and quickly determine, based on a size of the total amount of data that needs to be transmitted, the CG that needs to be used or the CG that does not need to be used, so that a redundant CG can be recycled, thereby avoiding waste of radio resources and improving communication efficiency.

### BRIEF DESCRIPTION OF DRAWINGS

FIG. 1 is a schematic architecture diagram of a communications system according to an embodiment of this application;
FIG. 2 is a schematic diagram of transmission of an XR image frame according to an embodiment of this application;
FIG. 3 is a first schematic flowchart of a CG determining method according to an embodiment of this application;
FIG. 4 is a second schematic flowchart of a CG determining method according to an embodiment of this application;
FIG. 5 is a first schematic diagram of a structure of a CG determining apparatus according to an embodiment of the present invention;
FIG. 6 is a second schematic diagram of a structure of a CG determining apparatus according to an embodiment of the present invention;
FIG. 7 is a schematic diagram of a structure of a communications device according to an embodiment of the present invention;
FIG. 8 is a schematic hardware diagram of a UE according to an embodiment of the present invention; and
FIG. 9 is a schematic diagram of a hardware structure of a network side device according to an embodiment of the present invention.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that the technologies described in the embodiments of this application are not limited to a long term evolution (Long Term Evolution, LTE)/LTE-advanced (LTE-Advanced, LTE-A) system, and may also be used in other wireless communications systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in the embodiments of this application may be used interchangeably. The technologies described can be applied to both the systems and the radio technologies mentioned above as well as to other systems and radio technologies. A new radio (New Radio, NR) system is described in the following description for illustrative purposes, and NR terms are used in most of the following description, although these technologies can also be applied to applications other than the NR system application, such as the 6-th generation (6th Generation, 6G) communications system.

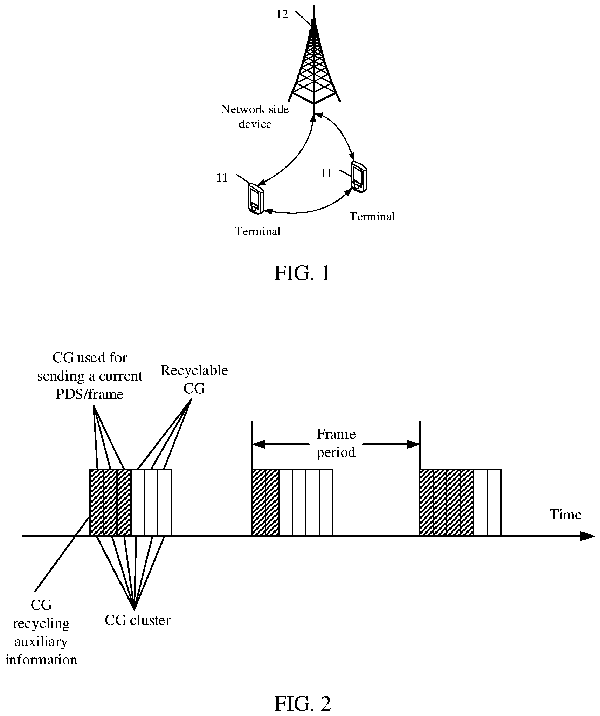

FIG. 1 is a block diagram of a wireless communications system to which embodiments of this application can be applied. The wireless communications system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or a furniture), a game console, a personal computer (personal computer, PC), a teller machine, or a self-service machine. The wearable device includes a smart watch, a smart band, a smart headset, smart glasses, smart jewelry (a smart bracelet, a smart hand chain, a smart ring, a smart necklace, a smart anklet, a smart ankle chain, and the like), a smart wristband, smart clothes, and the like. It should be noted that a specific type of the terminal 11 is not limited in the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station a WLAN access node, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as a same technical effect is achieved, the base station is not limited to a specified technical term. It should be noted that, in the embodiments of this application, description is made only by using a base station in an NR system as an example, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

The following describes technical terms involved in the technical solution provided in the embodiments of this application as an example.

### 1) XR service

The XR service includes an augmented reality (Augmented Reality, AR) service, a virtual reality (Virtual Reality, VR) service, and a mixed AR and VR (Mixed AR and VR, MR) service. Currently, a popular XR service uses an H.264 coding technology to implement image data compression, so as to save traffic and ensure image quality. In an existing H.264 technology, image data is encoded into the following three types of image frames:
1. An Intra-coded picture (Intra-coded picture, I frame) is a complete image frame, and may not depend on another frame for image generation and presentation.
2. A predicted picture (Predicted picture, P frame) includes only image change information relative to a preceding frame, and a receiver needs to generate a current frame with reference to the preceding frame, to complete display on a receiving terminal.
3. A bidirectional predicted picture (Bidirectional predicted picture, B frame) is used to indicate change information of a current frame relative to a preceding frame and a following frame. The receiver needs to generate the current frame with reference to the preceding frame and the following frame.

For example, the foregoing image frames are sorted based on a frame presentation time or an image collection time of a source end. An actual sending time and receiving time may be adjusted according to an image decoding time of the receiver. For example, a sender may perform sending based on an image frame decoding time sequence of the receiver.

For example, different frame types are corresponding to different frame coding methods, resulting in a different degree of image compression. A compression degree of the I frame is low (that is, corresponding to a maximum amount of data of the frame), a compression degree of the P frame is moderate (that is, corresponding to a moderate amount of data of the frame), and a compression degree of the B frame is highest (that is, corresponding to a minimum amount of data of the frame).

For example, an XR image has two transmission modes: One is a transmission mode based on frame slicing and grouping, and the other is a transmission mode based on a group of pictures (Group of Pictures, GoP).

Mode 1: Transmission mode based on frame slicing and grouping. One data frame is sliced into a plurality of data slices, and then macroblocks of a plurality of image frames are dispersedly grouped into a plurality of data slices for transmission, to achieve a purpose of smoothing traffic of an XR service data flow. In this method, a traffic fluctuation caused by a difference in an amount of data of an I/P/B frame is greatly reduced, but a transmission delay of an image frame is obviously increased due to cross transmission between image frames.

Mode 2: Transmission mode based on a group of pictures. Video frames are divided into a video frame group based on a periodicity of the video streams and a period of an I frame, where one I frame and all P frames and B frames before a next I frame form one frame group. An image frame is transmitted based on a frame period and played at a receiver, and a time interval between frame arrival times of adjacent image frames is one frame period. The transmission mode based on a group of pictures avoids hybrid transmission between image frames, so that a generated image frame is transmitted in a timely manner. Because the I, P, and B frames have different compression degrees, frame data rates fluctuate.

### 2) Protocol data unit (Protocol Data Unit, PDU) set

Currently, in a 3GPP related discussion, XR service data is modeled as a PDU set, and one PDU set includes a group of PDUs, so that quality of service (Quality of Service, QoS) management is performed on data on a basis of the PDU set when the data is transmitted in a wireless network. According to a video data transmission mode based on frame slicing and grouping and a video data transmission mode based on a group of pictures that are different, one PDU set may correspond to one image frame, for example, one complete P frame or B frame, or one XR service data slice; and another image frame may include several PDU sets. For example, when the image frames are separately transmitted following a left-eye line of sight and a right-eye line of sight, left-eye image data of one image frame corresponds to one PDU set, and right-eye image data corresponds to another PDU set. In addition, when an image is transmitted in a direction of a visual axis and a direction of a non-visual axis, image data in the direction of the visual axis corresponds to one PDU set, and image data in the direction of the non-visual axis corresponds to another PDU set.

### 3) XR service transmission in a 5G (New Radio, NR) network

XR service data is a service with a high data rate and a low-latency requirement. To reduce an uplink transmission delay, a preconfigured uplink transmission grant is used to perform XR service data transmission. However, an amount of data of each image frame (or PDU set) changes. To complete transmission of a frame having a large amount of data by using a CG, a sufficient CG cluster corresponding to the image frame needs to be allocated to the UE, and one CG cluster includes at least one CG to provide a sufficient uplink transmission capacity. However, when an amount of data of an XR image frame is small, a capacity provided by a corresponding CG cluster far exceeds a transmission requirement of the image frame, thereby causing waste of radio resources. As shown in FIG. 2, an example of XR image frame transmission based on a CG cluster is shown. One XR image frame may correspond to one or more PDU sets. A capacity provided by one CG cluster is significantly greater than that required for transmission of most XR image frames or PDU sets, so as to improve use efficiency of radio resources.

In a related technology, uplink XR service data transmission has a low latency requirement, and data can be rapidly transmitted by using a preconfigured uplink transmission grant. However, an amount of data of an XR image frame changes. To meet a transmission requirement of an image frame having a large amount of data, and for one image frame, a base station needs to allocate a plurality of uplink transmission grants to a UE, and provides a specific redundant uplink capacity.

However, when the XR image frame is relatively small, this preconfigured uplink transmission grant allocation method that maintains a margin causes relatively large resource waste. Therefore, it is proposed that when the base station determines, based on the amount of data of the image frame, that the UE does not need to use all corresponding preconfigured uplink transmission grants, and redundant preconfigured uplink transmission grants are recycled. However, the base station needs to obtain, in a timely manner, information used to determine which preconfigured uplink transmission grants can be recycled, so that the base station can schedule resources corresponding to the recycled preconfigured uplink transmission grants again. In addition, if the base station does not have enough time to schedule the resources, the resources corresponding to the recycled preconfigured uplink transmission grants cannot be effectively used, which causes waste of the recycled resources. Therefore, how to enable the base station to obtain enough information in a timely manner and effectively, and quickly determine a recyclable CG is a problem that needs to be resolved.

In a CG determining method and apparatus, a UE, a network side device, and a medium provided in embodiments of this application, the UE may obtain an amount of to-be-transmitted data of a CG cluster, and then determine, based on the amount of the to-be-transmitted data and an uplink transmission capacity provided by each CG in the CG cluster, at least one of a CG that needs to be used and a CG not to be used. In this way, because the UE can obtain a total amount of data that needs to be transmitted in the CG cluster, the UE can accurately and quickly determine, based on a size of the total amount of data that needs to be transmitted, the CG that needs to be used or the CG that does not need to be used, thereby improving communication efficiency.

For example, to recycle a redundant CG in the CG cluster accurately and in a timely manner and reallocate the recycled resource, the base station and the UE need to determine, in a timely manner, a CG required for transmitting one XR image frame and a recyclable CG. To achieve this objective, when the base station and the UE need to interact to transmit one XR image frame in a timely manner, the UE need to send usage information of a CG in a corresponding CG cluster to the base station, so that the base station may quickly determine a redundant CG, recycle the redundant CG, and then schedule the recycled resource for another transmission.

With reference to the accompanying drawings, a CG determining method and apparatus, a UE, a network side device, a medium provided in the embodiments of this application are described in detail by using some embodiments and application scenarios thereof.

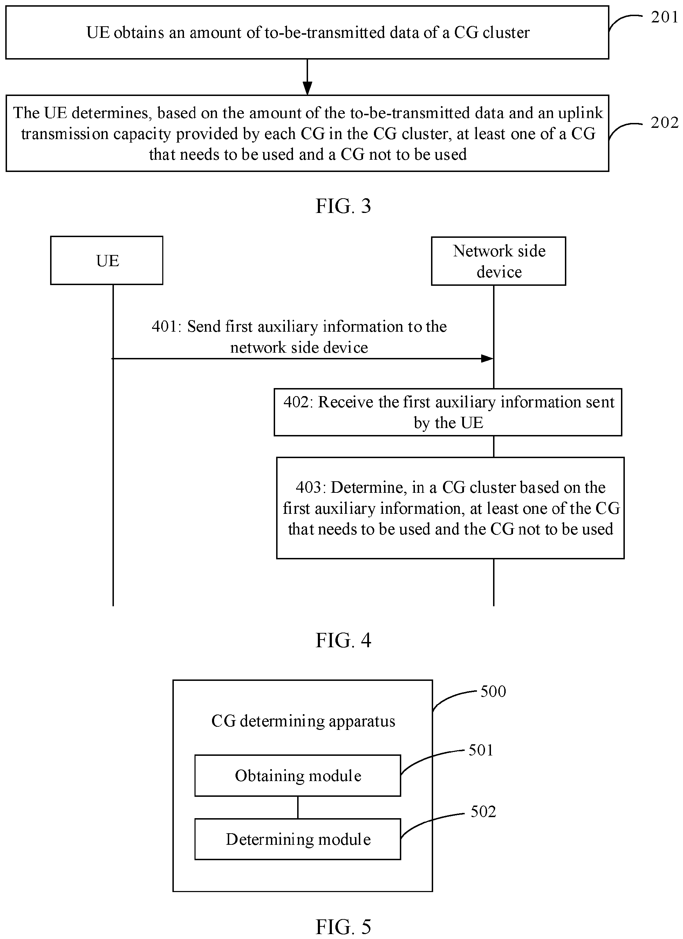

An embodiment of this application provides a CG determining method. As shown in FIG. 3, the CG determining method may include the following step 201 and step 202.

Step 201: a UE obtains an amount of to-be-transmitted data of a CG cluster.

In this embodiment of this application, the CG cluster may include all CGs in the current UE.

In this embodiment of this application, the amount of the to-be-transmitted data may include an amount of all data that needs to be transmitted in the CG cluster.

Step 202: The UE determines, based on the amount of the to-be-transmitted data and an uplink transmission capacity provided by each CG in the CG cluster, at least one of a CG that needs to be used and a CG not to be used.

In this embodiment of this application, the uplink transmission capacity provided by each CG is used to indicate a maximum amount of data that can be transmitted by each CG.

In this embodiment of this application, the CG not to be used may be determined as a recyclable CG.

Optionally, in this embodiment of this application, that "UE obtains an amount of to-be-transmitted data of a CG cluster" in step 201 may include at least one of the following step 201a and step 201b.

Step 201a: The UE determines the amount of the to-be-transmitted data in a case that an image frame corresponding to the CG cluster arrives intactly.

In this embodiment of this application, after determining that an XR image frame that needs to be transmitted in the CG cluster completely arrives at a sending buffer, the UE determines an amount of XR service data that needs to be transmitted in the CG cluster.

Step 201b: The UE determines the amount of the to-be-transmitted data in a case that at least one PDU set corresponding to the CG cluster arrives intactly.

In this embodiment of this application, after determining that a PDU set that needs to be transmitted in the CG cluster completely arrives at a sending buffer, the UE determines an amount of XR service data that needs to be transmitted in the CG cluster.

In this way, after the XR image frame or the PDU set completely arrives at the sending buffer, the amount of XR service data that needs to be transmitted is determined, thereby further ensuring accuracy of the determined amount of data.

Optionally, in this embodiment of this application, that "the UE determines, based on the amount of the to-be-transmitted data and an uplink transmission capacity provided by each CG in the CG cluster, at least one of a CG that needs to be used and a CG not to be used" in step 202 may include the following step 202a:
Step 202a: The UE determines, based on the amount of the to-be-transmitted data, the uplink transmission capacity provided by each CG in the CG cluster, and a usage sequence of each CG in the CG cluster, at least one of the CG that needs to be used and the CG not to be used.

In this embodiment of this application, the UE may determine, based on the amount of XR service data that needs to be transmitted in the CG cluster, the uplink transmission capacity provided by each CG in the CG cluster, and the usage sequence of each CG in the CG cluster, the CG that needs to be used, and then determine a remaining CG as a recyclable CG.

For example, as shown in FIG. 2, a CG cluster includes six CGs. In the first CG cluster, the UE determines that all XR data information that needs to be transmitted by the CG cluster has arrived at the sending buffer. After the UE generates report auxiliary information, the UE completes reporting by using the first CG. The UE determines, based on the auxiliary information, that the first three CGs in the CG cluster need to be used, and the last three CGs remaining are recyclable CGs.

Optionally, in this embodiment of this application, the usage sequence of each CG in the CG cluster is determined based on at least one of the following:
1) a time sequence of the CG;
2) a sequence number of a transmission carrier corresponding to the CG, where the transmission carrier includes at least one of the following: a cell and a carrier;
3) a sequence number of the CG; and
4) first indication information received from a network side device, where the first indication information is used to indicate the usage sequence of the CG.

For 1), for example, a CG with an earlier start time is preferentially used, or a CG with an earlier end time is preferentially used.

For 2), for example, when the UE is configured with a plurality of aggregation carriers, the UE that uses CGs in different cells may follow a predefined or preconfigured usage sequence.

For 3), for example, a CG whose indication sequence number is small corresponds to a high usage priority.

In this way, the usage sequence of each CG in the CG cluster is preset, so that the UE can determine, based on the usage sequence, the CG that needs to be used, thereby improving accuracy of determining the CG.

Optionally, in this embodiment of this application, after step 202, the CG determining method provided in this embodiment of this application may further include the following step 301:
Step 301: The UE sends first auxiliary information to the network side device.

In this embodiment of this application, the first auxiliary information is used to determine, in the CG cluster, at least one of the CG that needs to be used and the CG not to be used.

Optionally, in this embodiment of this application, that "the UE sends first auxiliary information to the network side device" in step 301 may include the following step 301a:

Step 301a: The UE sends the first auxiliary information to the network side device when data transmission is first performed by using a CG in the CG cluster.

Correspondingly, after receiving the first auxiliary information, the network side device may determine, in the CG cluster based on the first auxiliary information, at least one of the CG that needs to be used and the CG not to be used.

For example, before the last CG in the CG cluster starts to be used to transmit data, the UE may send the first auxiliary information to the network side device, so that the network side device can obtain the first auxiliary information in a timely manner.

For example, as shown in FIG. 2, the UE may send the first auxiliary information in any one of the first two CGs, so that the network side device can receive the first auxiliary information in a timely manner, and determine, based on the first auxiliary information, a CG that needs to be recycled, so as to perform recycling.

**In** this way, when data transmission is first transmitted by using the CG, the first auxiliary information is sent to the network side device, so that the sent first auxiliary information can be effectively used, thereby further improving communication efficiency.

Optionally, in this embodiment of this application, the first auxiliary information is used to indicate the amount of the to-be-transmitted data of the CG cluster.

Optionally, in this embodiment of this application, the first auxiliary information is carried in a buffer status report (Buffer Status Report, BSR).

Optionally, in this embodiment of this application, the BSR further includes indication information.

For example, the indication information is used to indicate that the BSR is used to report the amount of the to-be-transmitted data of the CG cluster.

For example, the first auxiliary information may be reported by using a BSR. A BSR medium access control (Medium Access Control, MAC) control unit (Control Element, CE) carries explicit or implicit indication information, and the indication information is used to indicate the amount of data that needs to be transmitted in the CG cluster.

It should be noted that the BSR MAC CE may be a path for exchanging control information between the UE and a network.

Optionally, in this embodiment of this application, the indication information includes a first logical channel identity (Logical Channel Identity, LCID).

For example, the first LCID is used to indicate that the BSR is used to report the amount of the to-be-transmitted data of the CG cluster.

For example, the UE may reuse an existing BSR format. The BSR format includes a short BSR format and a long BSR format. Then, the UE may define a new LCID used for transmission of the BSR MAC CE. The BSR is configured to report buffer information based on a logical channel group (Logical Channel Group, LCG), where the buffer information of the LCG includes at least a corresponding amount of all data of an XR image frame that needs to be transmitted in the CG cluster. Therefore, after receiving the BSR, the network side device may determine, based on the LCID, that the amount of data indicated by the BSR is the amount of data that needs to be transmitted in the CG cluster.

Optionally, in this embodiment of this application, the first auxiliary information includes a BSR.

For example, the BSR is specifically used to indicate the amount of the to-be-transmitted data of the CG cluster.

For example, the UE may define a new BSR format, and the new BSR format indicates an amount of data of an XR image frame that needs to be transmitted by using the CG cluster. The BSR may report the amount of the to-be-transmitted data based on the XR image frame (or a PDU set or a data burst).

Optionally, in this embodiment of this application, the first auxiliary information includes usage information of each CG in the CG cluster.

For example, the usage information is used to indicate whether each CG in the CG cluster is the CG that needs to be used.

For example, after determining the CG that needs to be used in the CG cluster, the UE may report the usage information of the CG in the CG cluster to the network side device. After receiving the usage information of the CG, the network side device determines CG information that can be recycled.

For example, after the UE completely sends the first auxiliary information, the UE may determine, based on the first auxiliary information, a CG that is in the CG cluster and that is used for data transmission of the XR image frame. For a CG that is in the CG cluster and that is not determined to be used based on the first auxiliary information, the UE may no longer use the CG to perform uplink data transmission.

In this way, the usage information of the CG in the CG cluster may be directly sent, thereby improving efficiency of determining a recycled CG.

Optionally, in this embodiment of this application, the CG cluster includes a plurality of CG clusters.

In this embodiment of this application, each CG cluster in the plurality of CG clusters corresponds to at least one transmission carrier, and the transmission carrier includes at least one of the following: a cell and a carrier.

In this embodiment of this application, the plurality of CG clusters may be transmitted by using one transmission carrier, or may be transmitted by using a plurality of transmission carriers.

For example, usage information of each of the plurality of CG clusters may be indicated by a transmission carrier to which each of the plurality of CG clusters belongs.

For example, the UE may indicate the usage information of each CG based on the transmission carrier to which the CG cluster belongs. Each transmission carrier corresponds to a first indication and a second indication, the first indication is used to indicate identification information of the transmission carrier, and the second indication is used to indicate the usage information of the CG in the CG cluster in the transmission carrier.

Optionally, in this embodiment of this application, the usage information of each CG in the CG cluster includes at least one of the following:
(1) a sequence number or sequence number range of the CG that needs to be used or the CG not to be used, where each CG corresponds to one sequence number;
(2) a first bitmap corresponding to the CG that needs to be used or the CG not to be used, where the first bitmap includes a correspondence between a bit sequence number and a CG sequence number; and
(3) a quantity of CGs in the CG that needs to be used or the CG not to be used.

For (1), for example, the CG in the CG cluster is numbered to indicate a sequence number range of a CG that needs to be used or a CG that does not need to be used.

For (2), for example, each CG in the CG cluster is corresponding to a sequence number of each bit sequence number in the indication bitmap (that is, the foregoing first bitmap), and a usage status of the CG is indicated by using the indication bitmap, so that the bit sequence number in the indication bitmap is in a one-to-one correspondence from a lower bit to a higher bit with the CG sequence number in an ascending order.

For (3), for example, the usage information includes only a quantity of CGs that need to be used in the CG cluster, and then the UE and the network side device use CGs in the CG cluster in a predetermined or preconfigured order, and another CG not to be used is a recyclable CG.

In this embodiment of this application, the usage information of each CG in the CG cluster may be indicated by using a MAC CE.

In this embodiment of this application, when the UE sends the usage information of each CG in the CG cluster to the network side device, the UE needs to allocate an identifier to each CG. For example, a sequence number of each CG in the CG cluster is determined.

Optionally, in this embodiment of this application, the sequence number of the CG is determined based on at least one of the following:
I) numbering based on a time sequence of the CG;
II) numbering based on a sequence number of a transmission carrier corresponding to the CG, where the transmission carrier includes at least one of the following: a cell and a carrier;
III) determining based on both the time sequence of the CG and the sequence number of the transmission carrier;
IV) determining based on received configuration information of the CG from the network side device, where the configuration information includes the sequence number of the CG; and
V) determining based on a received activation command, where the activation command includes the sequence number of the CG, and the activation command is used to activate the CG.

For I), for example, a CG that is earlier in a time sequence has a smaller sequence number.

For II), for example, a CG with a smaller sequence number of a transmission carrier has a smaller sequence number.

For III), in an example 1, a CG with a smaller sequence number of a transmission carrier has a smaller sequence number, and when the plurality of CGs are in a same transmission carrier, a CG that is earlier in a time sequence has a smaller sequence number; and in an example 2, a CG that is earlier in a time sequence has a smaller sequence number, and when a plurality of CGs in different transmission carriers start at a same moment, a CG with a smaller sequence number of a transmission carrier has a smaller sequence number.

For IV), for example, when providing a CG configuration, the network side device configures a sequence number of each CG configured based on the CG configuration.

In the CG determining method provided in this embodiment of this application, the UE may obtain the amount of the to-be-transmitted data of the CG cluster, and then determine, based on the amount of the to-be-transmitted data and the uplink transmission capacity provided by each CG in the CG cluster, at least one of the CG that needs to be used and the CG not to be used. In this way, because the UE can obtain a total amount of data that needs to be transmitted in the CG cluster, the UE can accurately and quickly determine, based on a size of the total amount of data that needs to be transmitted, the CG that needs to be used or the CG that does not need to be used, so that a redundant CG can be recycled, thereby avoiding waste of radio resources and improving communication efficiency.

With reference to FIG. 3, an embodiment of this application provides a CG determining method. As shown in FIG. 4, the CG determining method may include the following step 401 to step 403.

Step 401: The UE sends first auxiliary information to the network side device.

It should be noted that for explanation of the first auxiliary information in step 401, refer to the detailed description in the embodiment corresponding to FIG. 3. Details are not described herein again.

Step 402: The network side device receives the first auxiliary information sent by the UE.

In this embodiment of this application, the first auxiliary information is used to determine, in the CG cluster, at least one of the CG that needs to be used and the CG not to be used.

Step 403: The network side device determines, in the CG cluster based on the first auxiliary information, at least one of the CG that needs to be used and the CG not to be used.

In this embodiment of this application, the CG not to be used may be determined as a recyclable CG.

Optionally, in this embodiment of this application, in a case that the first auxiliary information is used to indicate the amount of the to-be-transmitted data of the CG cluster, that "the network side device determines, in the CG cluster based on the first auxiliary information, at least one of the CG that needs to be used and the CG not to be used" in step 403 may include the following step 403a:
Step 403a: The network side device determines, based on the amount of the to-be-transmitted data and an uplink transmission capacity provided by each CG in the CG cluster, at least one of the CG that needs to be used and the CG not to be used.

In this embodiment of this application, the amount of the to-be-transmitted data may include a total amount of data that needs to be transmitted in the CG cluster.

In this embodiment of this application, the uplink transmission capacity provided by each CG is used to indicate a maximum amount of data that can be transmitted by each CG.

In this way, the network side device can effectively recycle a redundant CG, and improve a system capacity by using the recycled resource. Optionally, in this embodiment of this application, that "the network side device determines, based on the amount of the to-be-transmitted data and an uplink transmission capacity provided by each CG in the CG cluster, at least one of the CG that needs to be used and the CG not to be used" in step 403a may include the following step 403a1:
Step 403a1: The network side device determines, based on the amount of the to-be-transmitted data, the uplink transmission capacity provided by each CG in the CG cluster, and a usage sequence of each CG in the CG cluster, at least one of the CG that needs to be used and the CG not to be used.

In this embodiment of this application, the network side device may determine, based on the received amount of XR service data that is to be transmitted in the CG cluster, the uplink transmission capacity provided by each CG in the CG cluster, and the usage sequence of each CG in the CG cluster, the CG that needs to be used, and then determine a remaining CG as a recyclable CG.

For example, as shown in FIG. 2, one CG cluster includes six CGs. After receiving auxiliary information sent by the UE in the first CG, the network side device may determine, based on the auxiliary information, that the first three CGs in the CG cluster need to be used, and the last three CGs remaining are recoverable CGs.

Optionally, in this embodiment of this application, the usage sequence of each CG in the CG cluster is determined based on at least one of the following:
1) a time sequence of the CG;
2) a sequence number of a transmission carrier corresponding to the CG, where the transmission carrier includes at least one of the following: a cell and a carrier;
3) a sequence number of the CG; and
4) first indication information sent by the network side device to the UE, where the first indication information is used to indicate the usage sequence of the CG.

In this way, the usage sequence of each CG in the CG cluster is preset, so that the network side device can determine, based on the usage sequence, the CG that needs to be used, thereby improving accuracy of determining the CG.

It should be noted that for a specific explanation of the first auxiliary information and related information of the first auxiliary information, refer to the foregoing detailed description of the first auxiliary information and the related information of the first auxiliary information. Details are not described herein again.

In this embodiment of this application, in a case that the UE performs XR data transmission by using a CG, the UE may trigger generation of auxiliary information after XR service data corresponding to a CG cluster completely arrives at a cache to be reached, determine, based on the XR service data, a CG that needs to be used, and then send the auxiliary information to the network side device.

Example 1: When the auxiliary information includes a new BSR, the UE and the network side device determine, based on the new BSR, a CG that needs to be used, and use a remaining CG as a recyclable redundant CG.

Example 2: When the auxiliary information includes the usage information of the CG in the CG cluster, the UE and the network side device may directly determine, based on a method indicated by the usage information (for example, based on an indication method of the CG sequence number and the indication bitmap), the CG that needs to be used or the CG that does not need to be used.

Example 3: When the auxiliary information includes only a quantity of CGs that need to be used, the UE and the network side device may preset a principle of using a CG (for example, a preset priority of using the CG).

It should be noted that the CG determining method provided in this embodiment of this application may be further extended to a next-generation mobile communications technology.

It should be noted that the CG determining method provided in this embodiment of this application may be further extended to another service that is transmitted by using a CG cluster other than XR. When all service data that needs to be transmitted by using the CG cluster arrives at a sending buffer, auxiliary information reporting and determining and recycling a redundant CG may be triggered by using a method similar to that provided in this embodiment of this application.

In the CG determining method provided in this embodiment of this application, the network side device may receive the first auxiliary information sent by the UE, and then determine, in the CG cluster based on the first auxiliary information, at least one of the CG that needs to be used and the CG not to be used. In this way, the network side device can accurately and quickly determine, based on the first auxiliary information, the CG that needs to be used or the CG that does not need to be used, so that a redundant CG can be recycled, thereby avoiding waste of radio resources and improving communication efficiency.

The CG determining method provided in this embodiment of this application may be executed by a CG determining apparatus. In this embodiment of this application, that the CG determining apparatus performs the CG determining method is used as an example to describe the CG determining apparatus provided in the embodiments of this application.

An embodiment of this application provides a CG determining apparatus. As shown in FIG. 5, the CG determining apparatus 500 includes an obtaining module 501 and a determining module 502, where the obtaining module 501 is configured to obtain an amount of to-be-transmitted data of a CG cluster; and the determining module 502 is configured to determine, based on the amount of the to-be-transmitted data obtained by the obtaining module 501 and an uplink transmission capacity provided by each CG in the CG cluster, at least one of a CG that needs to be used and a CG not to be used.

Optionally, in this embodiment of this application, the obtaining module 501 is configured to perform at least one of the following: determining the amount of the to-be-transmitted data in a case that an image frame corresponding to the CG cluster arrives intactly; and determining the amount of the to-be-transmitted data in a case that at least one PDU set corresponding to the CG cluster arrives intactly.

Optionally, in this embodiment of this application, the CG determining apparatus 500 further includes a sending module, where the sending module is configured to send first auxiliary information to a network side device after the obtaining module 501 obtains the amount of the to-be-transmitted data of the CG cluster; and the first auxiliary information is used to determine at least one of the CG that needs to be used and the CG not to be used.

Optionally, in this embodiment of this application, the first auxiliary information is used to indicate the amount of the to-be-transmitted data of the CG cluster.

Optionally, in this embodiment of this application, the first auxiliary information is carried in a buffer status report BSR.

Optionally, in this embodiment of this application, the BSR further includes indication information, and the indication information is used to indicate that the BSR is used to report the amount of the to-be-transmitted data of the CG cluster.

Optionally, in this embodiment of this application, the indication information includes a first logical channel identity LCID.

Optionally, in this embodiment of this application, the first auxiliary information includes usage information of each CG in the CG cluster; and the usage information is used to indicate whether each CG in the CG cluster is the CG that needs to be used.

Optionally, in this embodiment of this application, the CG cluster includes a plurality of CG clusters; each CG cluster in the plurality of CG clusters corresponds to at least one transmission carrier; and the transmission carrier includes at least one of the following: a cell and a carrier.

Optionally, in this embodiment of this application, the usage information includes at least one of the following: a sequence number or sequence number range of the CG that needs to be used or the CG not to be used, where each CG corresponds to one sequence number; a first bitmap corresponding to the CG that needs to be used or the CG not to be used; and a quantity of CGs in the CG that needs to be used or the CG not to be used, where the first bitmap includes a correspondence between a bit sequence number and a CG sequence number.

Optionally, in this embodiment of this application, the sequence number of the CG is determined based on at least one of the following: numbering based on a time sequence of the CG; numbering based on a sequence number of a transmission carrier corresponding to the CG, where the transmission carrier includes at least one of the following: a cell and a carrier; determining based on received configuration information of the CG from the network side device, where the configuration information includes the sequence number of the CG; and determining based on a received activation command, where the activation command includes the sequence number of the CG, and the activation command is used to activate the CG.

Optionally, in this embodiment of this application, the sending module is specifically configured to send the first auxiliary information to the network side device when data transmission is first performed by using a CG in the CG cluster.

Optionally, in this embodiment of this application, the determining module 502 is specifically configured to determine, based on the amount of the to-be-transmitted data, the uplink transmission capacity provided by each CG in the CG cluster, and a usage sequence of each CG in the CG cluster, at least one of the CG that needs to be used and the CG not to be used, where the usage sequence is determined based on at least one of the following: the time sequence of the CG; the sequence number of the transmission carrier corresponding to the CG, where the transmission carrier includes at least one of the following: a cell and a carrier; the sequence number of the CG; and first indication information received from the network side device, where the first indication information is used to indicate the usage sequence of the CG.

In the CG determining apparatus provided in this embodiment of this application, the apparatus may obtain the amount of the to-be-transmitted data of the CG cluster, and then determine, based on the amount of the to-be-transmitted data and the uplink transmission capacity provided by each CG in the CG cluster, at least one of the CG that needs to be used and the CG not to be used. In this way, because the apparatus can obtain a total amount of data that needs to be transmitted in the CG cluster, the apparatus can accurately and quickly determine, based on a size of the total amount of data that needs to be transmitted, the CG that needs to be used or the CG that does not need to be used, so that a redundant CG can be recycled, thereby avoiding waste of radio resources and improving communication efficiency.

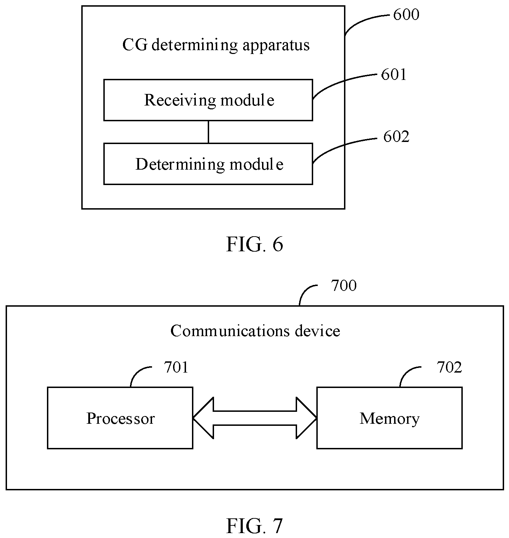

An embodiment of this application provides a CG determining apparatus. As shown in FIG. 6, the CG determining apparatus 600 includes a receiving module 601 and a determining module 602. The receiving module 601 is configured to receive first auxiliary information sent by a UE, where the first auxiliary information is used to determine, in a CG cluster, at least one of a CG that needs to be used and a CG not to be used; and the determining module 602 is configured to determine, in the CG cluster based on the first auxiliary information received by the receiving module 601, at least one of the CG that needs to be used and the CG not to be used.

Optionally, in this embodiment of this application, the first auxiliary information is used to indicate the amount of the to-be-transmitted data of the CG cluster. The determining module 602 is specifically configured to determine, based on the amount of the to-be-transmitted data and an uplink transmission capacity provided by each CG in the CG cluster, at least one of the CG that needs to be used and the CG not to be used.

Optionally, in this embodiment of this application, the first auxiliary information is carried in a buffer status report BSR.

Optionally, in this embodiment of this application, the BSR further includes indication information, and the indication information is used to indicate that the BSR is used to report the amount of the to-be-transmitted data of the CG cluster.

Optionally, in this embodiment of this application, the indication information includes a first logical channel identity LCID.

Optionally, in this embodiment of this application, the first auxiliary information includes usage information of each CG in the CG cluster; and the usage information is used to indicate whether each CG in the CG cluster is the CG that needs to be used.

Optionally, in this embodiment of this application, the CG cluster includes a plurality of CG clusters; each CG cluster in the plurality of CG clusters corresponds to at least one transmission carrier; and the transmission carrier includes at least one of the following: a cell and a carrier.

Optionally, in this embodiment of this application, the usage information includes at least one of the following: a sequence number or sequence number range of the CG that needs to be used or the CG not to be used, where each CG corresponds to one sequence number; a first bitmap corresponding to the CG that needs to be used or the CG not to be used; and a quantity of CGs in the CG that needs to be used or the CG not to be used, where the first bitmap includes a correspondence between a bit sequence number and a CG sequence number.

Optionally, in this embodiment of this application, the sequence number of the CG is determined based on at least one of the following: numbering based on a time sequence of the CG; numbering based on a sequence number of a transmission carrier corresponding to the CG, where the transmission carrier includes at least one of the following: a cell and a carrier; configuration information of the CG that is sent by the network side device, where the configuration information includes the sequence number of the CG; and an activation command sent by the network side device to the UE, where the activation command includes the sequence number of the CG, and the activation command is used to activate the CG.

Optionally, in this embodiment of this application, the determining module 602 is specifically configured to determine, based on the amount of the to-be-transmitted data, the uplink transmission capacity provided by each CG in the CG cluster, and a usage sequence of each CG in the CG cluster, at least one of the CG that needs to be used and the CG not to be used, where the usage sequence is determined based on at least one of the following: the time sequence of the CG; the sequence number of the transmission carrier corresponding to the CG, where the transmission carrier includes at least one of the following: a cell and a carrier; the sequence number of the CG; and first indication information sent by the network side device to the UE, where the first indication information is used to indicate the usage sequence of the CG.

In the CG determining apparatus provided in this embodiment of this application, the apparatus may receive the first auxiliary information sent by the UE, and then determine, in the CG cluster based on the first auxiliary information, at least one of the CG that needs to be used and the CG not to be used. In this way, the apparatus can accurately and quickly determine, based on the first auxiliary information, the CG that needs to be used or the CG that does not need to be used, so that a redundant CG can be recycled, thereby avoiding waste of radio resources and improving communication efficiency.

The CG determining apparatus in this embodiment of this application may be an electronic device, for example, an electronic device with an operating system, or may be a component in an electronic device, for example, an integrated circuit or a chip. The electronic device may be a terminal, or another device other than the terminal. For example, the terminal may include but is not limited to the types of the foregoing listed terminal 11, and the another device may be a server, a network attached storage (Network Attached Storage, NAS), or the like. This is not specifically limited in the embodiments of this application.

The CG determining apparatus provided in this embodiment of this application can implement the processes implemented in the foregoing method embodiment, and a same technical effect can be achieved. To avoid repetition, details are not described herein again.

Optionally, as shown in FIG. 7, an embodiment of this application further provides a communications device 700, including a processor 701 and a memory 702. A program or instructions executable on the processor 701 are stored in the memory 702. For example, if the communications device 700 is a UE, when the program or the instructions are executed by the processor 701, each step of the method embodiment on the UE side is implemented, and a same technical effect can be achieved. If the communications device 700 is a network side device, when the program or the instructions are executed by the processor 701, each step of the method embodiment of the network side device is implemented, and a same technical effect can be achieved. To avoid repetition, details are not described herein again.

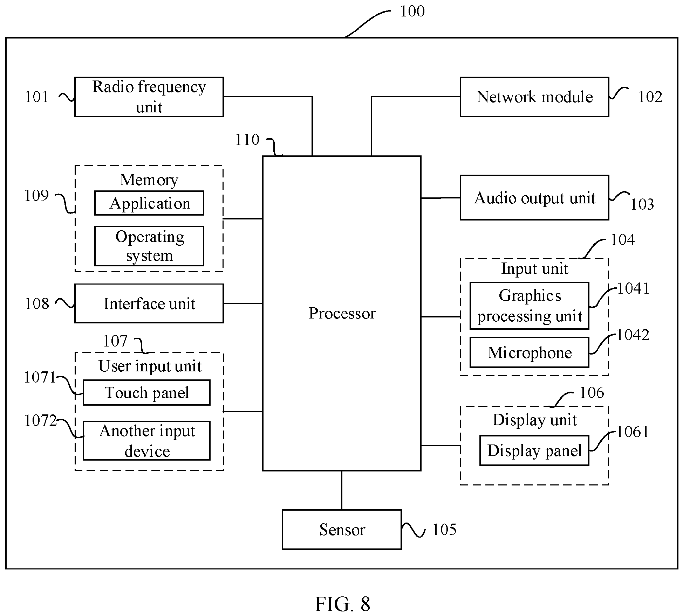

An embodiment of this application further provides a terminal, including a processor and a communications interface. The processor is configured to: obtain an amount of to-be-transmitted data of a CG cluster; and determine, based on the amount of the to-be-transmitted data and an uplink transmission capacity provided by each CG in the CG cluster, at least one of a CG that needs to be used and a CG not to be used. The terminal embodiment corresponds to the method embodiment on the UE side. Each implementation process and implementation of the foregoing method embodiment may be applicable to the UE embodiment, and a same technical effect can be achieved. Specifically, FIG. 8 is a schematic diagram of a hardware structure of a terminal according to an embodiment of this application.

A terminal 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the terminal 100 may further include a power supply (such as a battery) that supplies power to each component. The power supply may be logically connected to the processor 110 by using a power supply management system, to implement functions such as charging and discharging management, and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in this embodiment of this application, the input unit 104 may include a graphics processing unit (Graphics Processing Unit, GPU) 1041 and a microphone 1042, and the graphics processing unit 1041 processes image data of a still picture or a video obtained by an image capture apparatus (such as a camera) in a video capture mode or an image capture mode. The display unit 106 may include a display panel 1061. Optionally, the display panel 1061 may be configured in a form such as a liquid crystal display or an organic light-emitting diode. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein.

In this embodiment of this application, the radio frequency unit 101 receives downlink data from a network side device, and then may transmit the downlink data to the processor 110 for processing. In addition, the radio frequency unit 101 may send uplink data to the network side device. Usually, the radio frequency unit 101 includes but is not limited to an antenna, an amplifier, a transceiver, a coupler, a low noise amplifier, a duplexer, and the like.

The memory 109 may be configured to store a software program or an instruction and various data. The memory 109 may mainly include a first storage area for storing a program or an instruction and a second storage area for storing data. The first storage area may store an operating system, and an application or an instruction required by at least one function (for example, a sound playing function or an image playing function). In addition, the memory 109 may be a volatile memory or a nonvolatile memory, or the memory 109 may include a volatile memory and a nonvolatile memory. The nonvolatile memory may be a Read-Only Memory (ROM), a Programmable ROM (PROM), an Erasable PROM (EPROM), an Electrically EPROM (EEPROM), or a flash memory. The volatile memory may be random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synclink DRAM, SLDRAM), and a direct rambus random access memory (Direct Rambus RAM, DRRAM). The memory 109 in this embodiment of this application includes but is not limited to these memories and any memory of another proper type.

The processor 110 may include one or more processing units. Optionally, an application processor and a modem processor are integrated into the processor 110. The application processor mainly processes an operating system, a user interface, an application, or the like. The modem processor mainly processes a wireless communication signal, for example, a baseband processor. It may be understood that, the modem processor may alternatively not be integrated into the processor 110.

The processor 110 is configured to: obtain an amount of to-be-transmitted data of a CG cluster; and determine, based on the amount of the to-be-transmitted data and an uplink transmission capacity provided by each CG in the CG cluster, at least one of a CG that needs to be used and a CG not to be used.

Optionally, in this embodiment of this application, the processor 110 is configured to perform at least one of the following: determining the amount of the to-be-transmitted data in a case that an image frame corresponding to the CG cluster arrives intactly; and determining the amount of the to-be-transmitted data in a case that at least one PDU set corresponding to the CG cluster arrives intactly.

Optionally, in this embodiment of this application, the radio frequency unit 101 is configured to send first auxiliary information to a network side device after the processor 110 obtains the amount of the to-be-transmitted data of the CG cluster; and the first auxiliary information is used to determine at least one of the CG that needs to be used and the CG not to be used.

Optionally, in this embodiment of this application, the first auxiliary information is used to indicate the amount of the to-be-transmitted data of the CG cluster.

Optionally, in this embodiment of this application, the first auxiliary information is carried in a buffer status report BSR.

Optionally, in this embodiment of this application, the BSR further includes indication information, and the indication information is used to indicate that the BSR is used to report the amount of the to-be-transmitted data of the CG cluster.

Optionally, in this embodiment of this application, the indication information includes a first logical channel identity LCID.

Optionally, in this embodiment of this application, the first auxiliary information includes usage information of each CG in the CG cluster; and the usage information is used to indicate whether each CG in the CG cluster is the CG that needs to be used.

Optionally, in this embodiment of this application, the CG cluster includes a plurality of CG clusters; each CG cluster in the plurality of CG clusters corresponds to at least one transmission carrier; and the transmission carrier includes at least one of the following: a cell and a carrier.

Optionally, in this embodiment of this application, the usage information includes at least one of the following: a sequence number or sequence number range of the CG that needs to be used or the CG not to be used, where each CG corresponds to one sequence number; a first bitmap corresponding to the CG that needs to be used or the CG not to be used; and a quantity of CGs in the CG that needs to be used or the CG not to be used, where the first bitmap includes a correspondence between a bit sequence number and a CG sequence number.

Optionally, in this embodiment of this application, the sequence number of the CG is determined based on at least one of the following: numbering based on a time sequence of the CG; numbering based on a sequence number of a transmission carrier corresponding to the CG, where the transmission carrier includes at least one of the following: a cell and a carrier; determining based on received configuration information of the CG from the network side device, where the configuration information includes the sequence number of the CG; and determining based on a received activation command, where the activation command includes the sequence number of the CG, and the activation command is used to activate the CG.

Optionally, in this embodiment of this application, the radio frequency unit 101 is specifically configured to send the first auxiliary information to the network side device when data transmission is first performed by using a CG in the CG cluster.

Optionally, in this embodiment of this application, the processor 110 is specifically configured to determine, based on the amount of the to-be-transmitted data, the uplink transmission capacity provided by each CG in the CG cluster, and a usage sequence of each CG in the CG cluster, at least one of the CG that needs to be used and the CG not to be used, where the usage sequence is determined based on at least one of the following: the time sequence of the CG; the sequence number of the transmission carrier corresponding to the CG, where the transmission carrier includes at least one of the following: a cell and a carrier; the sequence number of the CG; and first indication information received from the network side device, where the first indication information is used to indicate the usage sequence of the CG.

In the terminal provided in this embodiment of this application, the terminal may obtain the amount of the to-be-transmitted data of the CG cluster, and then determine, based on the amount of the to-be-transmitted data and the uplink transmission capacity provided by each CG in the CG cluster, at least one of the CG that needs to be used and the CG not to be used. In this way, because the terminal can obtain a total amount of data that needs to be transmitted in the CG cluster, the terminal can accurately and quickly determine, based on a size of the total amount of data that needs to be transmitted, the CG that needs to be used or the CG that does not need to be used, so that a redundant CG can be recycled, thereby avoiding waste of radio resources and improving communication efficiency.

An embodiment of this application further provides a network side device, including a processor and a communications interface, where the communications interface is configured to receive first auxiliary information sent by a UE, where the first auxiliary information is used to determine, in a CG cluster, at least one of a CG that needs to be used and a CG not to be used; and the processor is configured to determine, in the CG cluster based on the first auxiliary information, at least one of the CG that needs to be used and the CG not to be used. The network side device embodiment corresponds to the method embodiment of the network side device. Each implementation process and implementation of the foregoing method embodiment may be applicable to the network side device embodiment, and a same technical effect can be achieved.

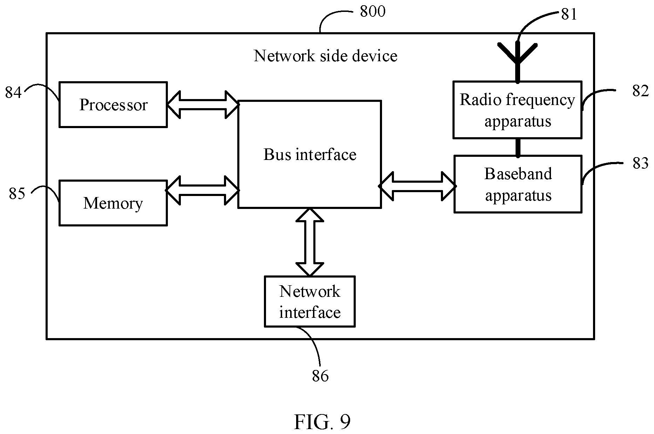

Specifically, an embodiment of this application further provides a network side device. As shown in FIG. 9, a network side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes information that needs to be sent, and sends processed information to the radio frequency apparatus 82. The radio frequency apparatus 82 processes the received information, and sends processed information by using the antenna 81.

The method performed by the network side device in the foregoing embodiment may be implemented in the baseband apparatus 83. The baseband apparatus 83 includes a baseband processor.

The baseband apparatus 83 may include, for example, at least one baseband board, where a plurality of chips are disposed on the baseband board. As shown in FIG. 9, one chip is, for example, the baseband processor, which is connected to the memory 85 through a bus interface, so as to invoke a program in the memory 85 to perform operations of the network side device shown in the foregoing method embodiment.

The network side device may further include a network interface 86. For example, the interface is a common public radio interface (common public radio interface, CPRI).

Specifically, the network side device 800 in this embodiment of the present invention further includes instructions or a program that is stored in the memory 85 and executable on the processor 84. The processor 84 invokes the instructions or the program in the memory 85 to perform the method performed by the modules shown in FIG. 6, and a same technical effect is achieved. To avoid repetition, details are not described herein again.

An embodiment of this application further provides a readable storage medium. A program or instructions are stored in the readable storage medium. When the program or the instructions are executed by a processor, each process of the embodiment of the foregoing CG determining method is implemented, and a same technical effect can be achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

An embodiment of this application further provides a chip, the chip includes a processor and a communications interface, the communications interface is coupled to the processor, and the processor is configured to run a program or instructions to implement each process of the embodiment of the foregoing CG determining method, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the computer program/program product is executed by at least one processor to implement each process of the embodiment of the foregoing CG determining method, and a same technical effect can be achieved. To avoid repetition, details are not described herein again.

An embodiment of this application further provides a CG determining system, including a UE and a network side device, where the UE may be configured to perform the steps of the CG determining method on the UE side, and the network side device may be configured to perform the steps of the CG determining method of the network side device.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A configured grant CG determining method, wherein the method comprises:
obtaining, by a user equipment UE, an amount of to-be-transmitted data of a CG cluster; and
determining, by the UE based on the amount of the to-be-transmitted data and an uplink transmission capacity provided by each CG in the CG cluster, at least one of a CG that needs to be used and a CG not to be used.

2. The method according to claim 1, wherein the obtaining, by the UE, the amount of the to-be-transmitted data of the CG cluster comprises at least one of the following:
determining, by the UE, the amount of the to-be-transmitted data in a case that an image frame corresponding to the CG cluster arrives intactly; and
determining, by the UE, the amount of the to-be-transmitted data in a case that at least one protocol data unit PDU set corresponding to the CG cluster arrives intactly.

3. The method according to claim 1 or 2, wherein after the obtaining, by the UE, the amount of the to-be-transmitted data of the CG cluster, the method further comprises:
sending, by the UE, first auxiliary information to a network side device, wherein
the first auxiliary information is used to determine at least one of the CG that needs to be used and the CG not to be used.

4. The method according to claim 3, wherein the first auxiliary information is used to indicate the amount of the to-be-transmitted data of the CG cluster.

5. The method according to claim 3 or 4, wherein the first auxiliary information is carried in a buffer status report BSR.

6. The method according to claim 5, wherein the BSR further comprises indication information, and the indication information is used to indicate that the BSR is used to report the amount of the to-be-transmitted data of the CG cluster.

7. The method according to claim 6, wherein the indication information comprises a first logical channel identity LCID.

8. The method according to any one of claims 3 to 7, wherein the first auxiliary information comprises usage information of each CG in the CG cluster; and
the usage information is used to indicate whether each CG in the CG cluster is the CG that needs to be used.

9. The method according to claim 8, wherein the CG cluster comprises a plurality of CG clusters;
each CG cluster in the plurality of CG clusters corresponds to at least one transmission carrier; and
the transmission carrier comprises at least one of the following: a cell and a carrier.

10. The method according to claim 8 or 9, wherein the usage information comprises at least one of the following:
a sequence number or sequence number range of the CG that needs to be used or the CG not to be used, wherein each CG corresponds to one sequence number;
a first bitmap corresponding to the CG that needs to be used or the CG not to be used; and
a quantity of CGs in the CG that needs to be used or the CG not to be used, wherein
the first bitmap comprises a correspondence between a bit sequence number and a CG sequence number.

11. The method according to claim 10, wherein the sequence number of the CG is determined based on at least one of the following:
numbering based on a time sequence of the CG;
numbering based on a sequence number of a transmission carrier corresponding to the CG, wherein the transmission carrier comprises at least one of the following: a cell and a carrier;
determining based on received configuration information of the CG from the network side device, wherein the configuration information comprises the sequence number of the CG; and
determining based on a received activation command, wherein the activation command comprises the sequence number of the CG, and the activation command is used to activate the CG.

12. The method according to any one of claims 3 to 11, wherein the sending, by the UE, the first auxiliary information to the network side device comprises:
sending, by the UE, the first auxiliary information to the network side device when data transmission is first performed by using a CG in the CG cluster.

13. The method according to any one of claims 1 to 12, wherein the determining, by the UE based on the amount of the to-be-transmitted data and the uplink transmission capacity provided by each CG in the CG cluster, at least one of the CG that needs to be used and the CG not to be used comprises:
determining, by the UE based on the amount of the to-be-transmitted data, the uplink transmission capacity provided by each CG in the CG cluster, and a usage sequence of each CG in the CG cluster, at least one of the CG that needs to be used and the CG not to be used, wherein
the usage sequence is determined based on at least one of the following:
a time sequence of the CG;
a sequence number of a transmission carrier corresponding to the CG, wherein the transmission carrier comprises at least one of the following: a cell and a carrier;
a sequence number of the CG; and
first indication information received from the network side device, wherein the first indication information is used to indicate the usage sequence of the CG.

14. A CG determining method, wherein the method comprises:
receiving, by a network side device, first auxiliary information sent by a UE, wherein the first auxiliary information is used to determine, in a CG cluster, at least one of a CG that needs to be used and a CG not to be used; and
determining, by the network side device in the CG cluster based on the first auxiliary information, at least one of the CG that needs to be used and the CG not to be used.

15. The method according to claim 14, wherein the first auxiliary information is used to indicate an amount of to-be-transmitted data of the CG cluster; and
the determining, by the network side device in the CG cluster based on the first auxiliary information, at least one of the CG that needs to be used and the CG not to be used comprises:
determining, by the network side device based on the amount of the to-be-transmitted data and an uplink transmission capacity provided by each CG in the CG cluster, at least one of the CG that needs to be used and the CG not to be used.

16. The method according to claim 14 or 15, wherein the first auxiliary information is carried in a buffer status report BSR.

17. The method according to claim 16, wherein the BSR further comprises indication information, and the indication information is used to indicate that the BSR is used to report the amount of the to-be-transmitted data of the CG cluster.

18. The method according to claim 17, wherein the indication information comprises a first logical channel identity LCID.

19. The method according to any one of claims 15 to 18, wherein the first auxiliary information comprises usage information of each CG in the CG cluster; and
the usage information is used to indicate whether each CG in the CG cluster is the CG that needs to be used.

20. The method according to claim 19, wherein the CG cluster comprises a plurality of CG clusters;
each CG cluster in the plurality of CG clusters corresponds to at least one transmission carrier; and
the transmission carrier comprises at least one of the following: a cell and a carrier.

21. The method according to claim 19 or 20, wherein the usage information comprises at least one of the following:
a sequence number or sequence number range of the CG that needs to be used or the CG not to be used, wherein each CG corresponds to one sequence number;
a first bitmap corresponding to the CG that needs to be used or the CG not to be used; and
a quantity of CGs in the CG that needs to be used or the CG not to be used, wherein
the first bitmap comprises a correspondence between a bit sequence number and a CG sequence number.

22. The method according to claim 21, wherein the sequence number of the CG is determined based on at least one of the following:
numbering based on a time sequence of the CG;
numbering based on a sequence number of a transmission carrier corresponding to the CG, wherein the transmission carrier comprises at least one of the following: a cell and a carrier;
configuration information of the CG that is sent by the network side device to the UE, wherein the configuration information comprises the sequence number of the CG; and
an activation command sent by the network side device to the UE, wherein the activation command comprises the sequence number of the CG, and the activation command is used to activate the CG.

23. The method according to any one of claims 15 to 22, wherein the determining, by the network side device based on the amount of the to-be-transmitted data and the uplink transmission capacity provided by each CG in the CG cluster, at least one of the CG that needs to be used and the CG not to be used comprises:
determining, by the network side device based on the amount of the to-be-transmitted data, the uplink transmission capacity provided by each CG in the CG cluster, and a usage sequence of each CG in the CG cluster, at least one of the CG that needs to be used and the CG not to be used, wherein
the usage sequence is determined based on at least one of the following:
a time sequence of the CG;
a sequence number of a transmission carrier corresponding to the CG, wherein the transmission carrier comprises at least one of the following: a cell and a carrier;
a sequence number of the CG; and
first indication information sent by the network side device to the UE, wherein the first indication information is used to indicate the usage sequence of the CG.

24. A CG determining apparatus, wherein the apparatus comprises an obtaining module and a determining module, wherein
the obtaining module is configured to obtain an amount of to-be-transmitted data of a CG cluster; and
the determining module is configured to determine, based on the amount of the to-be-transmitted data obtained by the obtaining module and an uplink transmission capacity provided by each CG in the CG cluster, at least one of a CG that needs to be used and a CG not to be used.

25. The apparatus according to claim 24, wherein
the obtaining module is configured to perform at least one of the following:
determining the amount of the to-be-transmitted data in a case that an image frame corresponding to the CG cluster arrives intactly; and
determining the amount of the to-be-transmitted data in a case that at least one PDU set corresponding to the CG cluster arrives intactly.

26. The apparatus according to claim 24 or 25, wherein the apparatus further comprises a sending module, wherein
the sending module is configured to send first auxiliary information to a network side device after the obtaining module obtains the amount of the to-be-transmitted data of the CG cluster; and
the first auxiliary information is used to determine at least one of the CG that needs to be used and the CG not to be used.

27. The apparatus according to claim 26, wherein the first auxiliary information is used to indicate the amount of the to-be-transmitted data of the CG cluster.

28. The apparatus according to claim 26 or 27, wherein the first auxiliary information is carried in a buffer status report BSR.

29. The apparatus according to claim 28, wherein the BSR further comprises indication information, and the indication information is used to indicate that the BSR is used to report the amount of the to-be-transmitted data of the CG cluster.

30. The apparatus according to claim 29, wherein the indication information comprises a first logical channel identity LCID.

31. The apparatus according to any one of claims 26 to 30, wherein the first auxiliary information comprises usage information of each CG in the CG cluster; and
the usage information is used to indicate whether each CG in the CG cluster is the CG that needs to be used.

32. The apparatus according to claim 31, wherein the CG cluster comprises a plurality of CG clusters;
each CG cluster in the plurality of CG clusters corresponds to at least one transmission carrier; and
the transmission carrier comprises at least one of the following: a cell and a carrier.

33. The apparatus according to claim 31 or 32, wherein the usage information comprises at least one of the following:
a sequence number or sequence number range of the CG that needs to be used or the CG not to be used, wherein each CG corresponds to one sequence number;
a first bitmap corresponding to the CG that needs to be used or the CG not to be used; and
a quantity of CGs in the CG that needs to be used or the CG not to be used, wherein
the first bitmap comprises a correspondence between a bit sequence number and a CG sequence number.

34. The apparatus according to claim 33, wherein the sequence number of the CG is determined based on at least one of the following:
numbering based on a time sequence of the CG;
numbering based on a sequence number of a transmission carrier corresponding to the CG, wherein the transmission carrier comprises at least one of the following: a cell and a carrier;
determining based on received configuration information of the CG from the network side device, wherein the configuration information comprises the sequence number of the CG; and
determining based on a received activation command, wherein the activation command comprises the sequence number of the CG, and the activation command is used to activate the CG.

35. The apparatus according to any one of claims 26 to 34, wherein
the sending module is specifically configured to send the first auxiliary information to the network side device when data transmission is first performed by using a CG in the CG cluster.

36. The apparatus according to any one of claims 24 to 35, wherein
the determining module is specifically configured to determine, based on the amount of the to-be-transmitted data, the uplink transmission capacity provided by each CG in the CG cluster, and a usage sequence of each CG in the CG cluster, at least one of the CG that needs to be used and the CG not to be used, wherein
the usage sequence is determined based on at least one of the following:
a time sequence of the CG;
a sequence number of a transmission carrier corresponding to the CG, wherein the transmission carrier comprises at least one of the following: a cell and a carrier;
a sequence number of the CG; and
first indication information received from the network side device, wherein the first indication information is used to indicate the usage sequence of the CG.

37. A CG determining apparatus, wherein the apparatus comprises a receiving module and a determining module, wherein
the receiving module is configured to receive first auxiliary information sent by UE, wherein the first auxiliary information is used to determine, in a CG cluster, at least one of a CG that needs to be used and a CG not to be used; and
the determining module is configured to determine, in the CG cluster based on the first auxiliary information received by the receiving module, at least one of the CG that needs to be used and the CG not to be used.

38. The apparatus according to claim 37, wherein the first auxiliary information is used to indicate an amount of to-be-transmitted data of the CG cluster; and
the determining module is specifically configured to determine, based on the amount of the to-be-transmitted data and an uplink transmission capacity provided by each CG in the CG cluster, at least one of the CG that needs to be used and the CG not to be used.

39. The apparatus according to claim 37 or 38, wherein the first auxiliary information is carried in a buffer status report BSR.

40. The apparatus according to claim 39, wherein the BSR further comprises indication information, and the indication information is used to indicate that the BSR is used to report the amount of the to-be-transmitted data of the CG cluster.

41. The apparatus according to claim 40, wherein the indication information comprises a first logical channel identity LCID.

42. The apparatus according to any one of claims 38 to 41, wherein the first auxiliary information comprises usage information of each CG in the CG cluster; and
the usage information is used to indicate whether each CG in the CG cluster is the CG that needs to be used.

43. The apparatus according to claim 42, wherein the CG cluster comprises a plurality of CG clusters;
each CG cluster in the plurality of CG clusters corresponds to at least one transmission carrier; and
the transmission carrier comprises at least one of the following: a cell and a carrier.

44. The apparatus according to claim 42 or 43, wherein the usage information comprises at least one of the following:
a sequence number or sequence number range of the CG that needs to be used or the CG not to be used, wherein each CG corresponds to one sequence number;
a first bitmap corresponding to the CG that needs to be used or the CG not to be used; and
a quantity of CGs in the CG that needs to be used or the CG not to be used, wherein
the first bitmap comprises a correspondence between a bit sequence number and a CG sequence number.

45. The apparatus according to claim 44, wherein the sequence number of the CG is determined based on at least one of the following:
numbering based on a time sequence of the CG;
numbering based on a sequence number of a transmission carrier corresponding to the CG, wherein the transmission carrier comprises at least one of the following: a cell and a carrier;
configuration information of the CG that is sent by the network side device to the UE, wherein the configuration information comprises the sequence number of the CG; and
an activation command sent by the network side device to the UE, wherein the activation command comprises the sequence number of the CG, and the activation command is used to activate the CG.

46. The apparatus according to any one of claims 38 to 45, wherein
the determining module is specifically configured to determine, based on the amount of the to-be-transmitted data, the uplink transmission capacity provided by each CG in the CG cluster, and a usage sequence of each CG in the CG cluster, at least one of the CG that needs to be used and the CG not to be used, wherein
the usage sequence is determined based on at least one of the following:
a time sequence of the CG;
a sequence number of a transmission carrier corresponding to the CG, wherein the transmission carrier comprises at least one of the following: a cell and a carrier;
a sequence number of the CG; and
first indication information sent by the network side device to the UE, wherein the first indication information is used to indicate the usage sequence of the CG.

47. A UE, comprising a processor and a memory, wherein the memory stores a program or instructions executable on the processor, and when the program or the instructions are executed by the processor, the steps of the CG determining method according to any one of claims 1 to 13 are implemented.

48. A network side device, comprising a processor and a memory, wherein the memory stores a program or instructions executable on the processor, and when the program or the instructions are executed by the processor, the steps of the CG determining method according to any one of claims 14 to 23 are implemented.

49. A readable storage medium, wherein a program or instructions are stored in the readable storage medium, and when the program or the instructions are executed by a processor, the steps of the CG determining method according to any one of claims 1 to 13 or the steps of the CG determining method according to any one of claims 14 to 23 are implemented.
